# EUROPEAN PATENT SPECIFICATION

(11) **EP 3 330 522 B1**
(45) Date of publication and mention of the grant of the patent: **28.10.2020**
(21) Application number: 16832758.3
(22) Date of filing: 20.07.2016
(51) Int. Cl.: F02D 41/20, F02M 51/00, F02M 51/06, F16K 31/06

(54) **CONTROL DEVICE OF FUEL INJECTION DEVICE**
STEUERUNGSVORRICHTUNG FÜR EINE KRAFTSTOFFEINSPRITZVORRICHTUNG
DISPOSITIF DE COMMANDE DE DISPOSITIF D'INJECTION DE CARBURANT

(30) Priority: 31.07.2015 JP 2015151456
(43) Date of publication of application: 06.06.2018
(73) Proprietor: Hitachi Automotive Systems, Ltd., Hitachinaka-shi, Ibaraki 312-8503 (JP)
(72) Inventor: AONO Toshihiro, Tokyo 100-8280 (JP); TOYOHARA Masahiro, Hitachinaka-shi Ibaraki 312-8503 (JP); MUKAIHARA Osamu, Hitachinaka-shi Ibaraki 312-8503 (JP)
(74) Representative: MERH-IP Matias Erny Reichl Hoffmann Patentanwälte PartG mbB
(86) International application number: PCT/JP2016/071202
(87) International publication number: WO 2017/022479

(56) References cited:
- WO-A1-2014/174916
- WO-A1-2014/174916
- WO-A1-2015/015541
- WO-A1-2015/015541
- WO-A1-2015/045508
- WO-A1-2015/045508
- DE-A1-102009 003 214
- DE-A1-102011 076 363
- JP-A- 2014 234 922
- JP-A- 2015 096 720
- JP-B1- S4 945 251
- US-A1- 2012 185 147
- US-A1- 2013 073 188
- US-A1- 2013 073 188

## Description

### Technical Field

The present invention relates to a control device for reducing variations among individual fuel injection devices for feeding fuel to an internal combustion engine.

### Background Art

As a method of driving a fuel injection device of a conventional direct-injection internal combustion engine, an amount of injection required by the internal combustion engine is injected on the basis of a preset drive current profile and a drive pulse Ti of the fuel injection valve. However, as requirements and regulations on exhaust gas are tightened, the flow rates vary with the individual properties of the fuel injection devices even when the same drive current profile and drive pulse Ti are given. Thus, a method of reducing such variations has been proposed.

For example, PTL 1 proposes a drive control device of an electromagnetic valve for controlling a flow rate of fluid, the drive control device of an electromagnetic valve being characterized by including a terminal voltage detection means for detecting a terminal voltage of a solenoid of the electromagnetic valve, a filtering means for extracting a particular frequency component from a detection signal of the terminal voltage obtained immediately after stoppage of current application to the solenoid, and an estimation means for estimating seating timing at which a valve element of the electromagnetic valve is seated on a valve seat on the basis of the particular frequency component.
Furthermore, PTL 2 and 3 respectively disclose a drive device for a fuel injection device.

### Citation List

### Patent Literature

PTL 1: JP 2014-234922 A
PTL 2: WO 2015/045 508 A1
PTL 3: WO 2015/015 541 A1

### Summary of Invention

### Technical Problem

One of the causes of variations in flow rate property of fuel injection devices is a bouncing caused when an anchor collides with and bounces off a core. In order to reduce a difference among the individual flow rate properties of the fuel injection devices, it is desirable that the momentum of the rising anchor be adjusted according to a set spring force to reduce a bouncing and synchronize the operations of the anchors . For this purpose, a set spring force needs to be estimated. In recent years, as described in Background Art, there have been made many inventions in which the valve closure completion timing of a valve of a fuel injection device is detected to correct the driving of the fuel injection device. In general, when a set spring force is strong, valve closure completion timing becomes earlier, and when a set spring force is weak, valve closure completion timing becomes later. Therefore, the valve closure completion timing correlates with the set spring force. When the set spring force is estimated from the valve closure completion timing on the basis of the correlation, the stroke of the fuel injection device is a disturbance of the estimation. When the stroke is longer, the valve closure completion time becomes later even when the set spring force is the same.

It is an object of the present invention to reduce the influence of stroke during estimation of a set spring force.

### Solution to Problem

In order to solve the aforementioned problem, for example, a configuration described in the claims is employed and solved by the features of the independent claims. The dependent claims are directed to preferred embodiments of the invention. To achieve the above-described objective, a control device of a fuel injection device of the present invention is characterized by consisting of an inflexion point extraction filter for filtering a drive voltage of a solenoid to extract inflexion points and a means of correcting a drive current on the basis of timing of a later inflexion point of the extracted inflexion points.

### Advantageous Effects of Invention

When the fuel injection valve is closed, two inflexion points appear in a solenoid drive voltage: one is when the valve element reaches the valve seat and the other is when the anchor collides with the stopper. The time at which the faster inflexion point of the inflexion points appears, i.e., the time at which the valve element reaches the valve seat, is subjected to the set spring force and the influence of the stroke, so that the time becomes later when the stroke is longer. Regarding movement between the two inflexion points, the valve element is accelerated over a long time when the stroke is longer. Therefore, the initial velocity becomes faster, so that the required time is shortened. Thus, at the time of the second inflexion point, i.e., the time at which the anchor reaches the stopper, the influence of the stroke is offset, enabling high-precision estimation of the set spring force. Thus, the momenta of the rising anchor and valve element during valve opening can be homogenized by being corrected according to the set spring force, thereby enabling a reduction in difference among the individual flow rate properties.

### Brief Description of Drawings

[FIG. 1] FIG. 1 is an example of an internal combustion engine.
[FIG. 2] FIG. 2 is an example of a fuel injection device.
[FIG. 3] FIG. 3 is an example of a control device of a fuel injection device.
[FIG. 4] FIG. 4 is an example of results of controlling of a fuel injection device with a control device.
[FIG. 5] FIG. 5 is an example of flow rate property of a fuel injection device.
[FIG. 6] FIG. 6 is an example of results of controlling of fuel injection devices.
[FIG. 7] FIG. 7 is a relationship between valve lift, solenoid voltage, and filter output.
[FIG. 8] FIG. 8 is results of operation of fuel injection devices having different strokes.
[FIG. 9] FIG. 9 is a relationship between spring force and a peak of filter output.
[FIG. 10] FIG. 10 is an example of a configuration of a device for detecting individual property of a fuel injection device to correct drive current.
[FIG. 11] FIG. 11 is an example of results of correction of peak current.
[FIG. 12] FIG. 12 is an example of results of correction of current canceling time.
[FIG. 13] FIG. 13 is an example of results of correction of holding current.
[FIG. 14] FIG. 14 is an example of a method of extracting a later inflexion point.
[FIG. 15] FIG. 15 is another example of a method of extracting a later inflexion point.

### Description of Embodiments

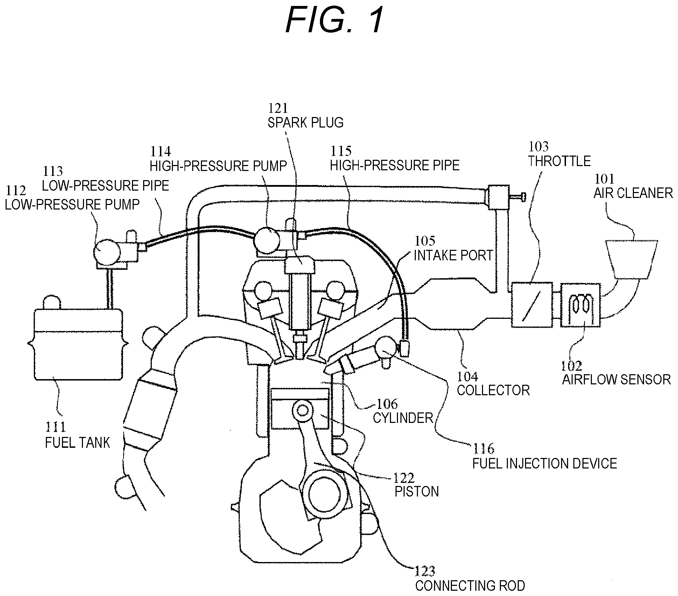

FIG. 1 illustrates an internal combustion engine including a fuel injection device controlled by a control device proposed by the present invention. The internal combustion engine introduces air and fuel into a cylinder 106, and ignites and explodes the mixture with a spark plug 121 to move a piston 122 back and forth by means of the energy of the explosion. The back-and-forth movement is converted into rotary movement of a crankshaft by a link mechanism, which is formed of a connecting rod 123 or the like, to provide a drive force for moving an automobile.

Air is filtered with an air cleaner 101, and the flow rate is adjusted by a throttle 103. The air passes through a collector 104 and an intake port 105, and flows into the cylinder 106. An airflow sensor 102 is present between the air cleaner 101 and the throttle 103, and measures the amount of air introduced into the internal combustion engine. Fuel in a fuel tank 111 is delivered to a low-pressure pipe 113 by a low-pressure pump 112. The fuel of the low-pressure pipe 113 is delivered to a high-pressure pipe 115 by a high-pressure pump 114. The fuel in the high-pressure pipe 115 is maintained at high pressure. The high-pressure pipe 115 is provided with a fuel injection device 116. When current is applied to the solenoid in the fuel injection device 116, the fuel injection valve is opened and the fuel is injected while the valve is open.

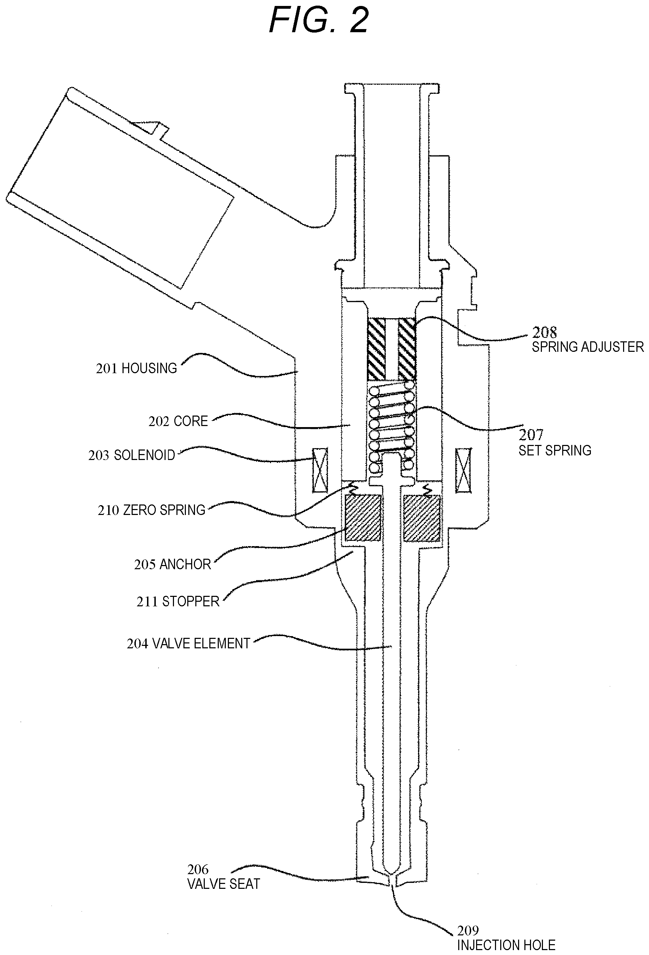

FIG. 2 illustrates a configuration of the fuel injection device. A member forming an outer side of the fuel injection device is a housing 201, to which a core 202 is fixed. Furthermore, a solenoid 203 is arranged to encircle a central axis of the fuel injection device. A valve element 204, which moves up and down, is arranged along the central axis. An anchor 205 is arranged to encircle the circumference of the valve element 204. A set spring 207, which presses down the valve element 204 in the direction of a valve seat 206, is arranged at an upper part of the valve element 204. At an upper part of the set spring 207, a spring adjuster 208 is fixed to the housing 201 and adjusts the spring force according to its upper and lower position.

The interior of the housing 201 is filled with the fuel. When current is applied to the solenoid 203, the anchor 205 is attracted to the solenoid 203 and a lower end of the valve element 204 is moved away from the valve seat 206, so that the fuel is injected through an injection hole 209, which is formed through the valve seat 206 and is previously blocked by the valve element 204. In addition, a stopper 211 is fixed to the valve element 204 or the housing 201. When the valve element is in a valve-closed state, the anchor 205 is pressed against the stopper 211 by a zero spring 210.

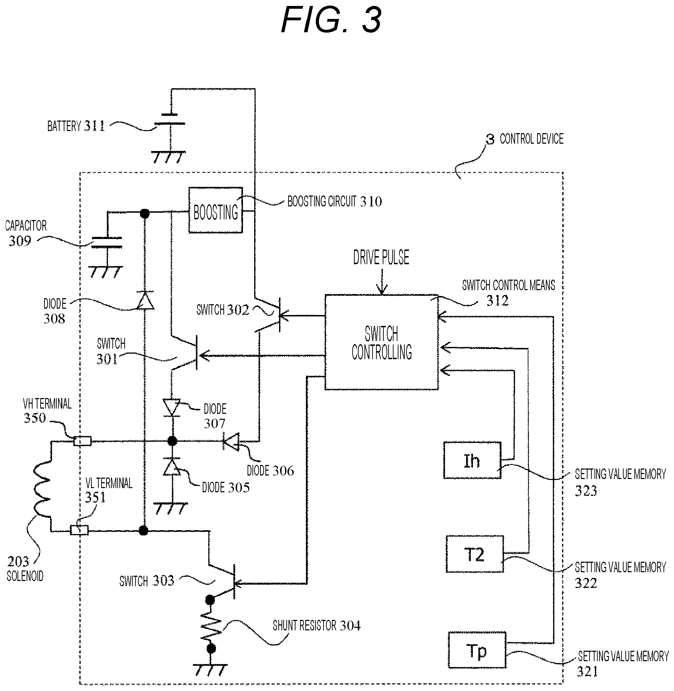

The fuel injection device configured in the above manner is controlled by a control device illustrated in FIG. 3. The control device uses power from a battery 311 to drive the solenoid 203. The control device includes a boosting circuit 310 for boosting a voltage of the battery 311, a capacitor 309 preserving a boosted voltage, and a switch 301 for turning ON and OFF between boosted voltage Vboost and a VH terminal 350 of the solenoid. The control device also includes a switch 302 for turning ON and OFF between battery voltage Vbat and the VH terminal 350 of the solenoid, a switch 303 for turning ON and OFF between a VL terminal 351 of the solenoid and ground voltage, a shunt resistor 304, which is arranged between the switch and the GND and generates a voltage proportional to current, and a diode 308 for applying current only in a direction from the VL terminal to the portion between the capacitor 309 and the boosting circuit 310. The control device also includes a diode 305 for applying current only to the VH terminal from the GND, setting value memories 321, 322, 323 for storing time Tp over which the Vboost is applied, time T2 from canceling of the above to next application of a battery voltage, and current value Ih applied as the battery voltage is switched, and a switch control means 312 for turning the three switches ON and OFF on the basis of an internal timer or current measured by a resistor.

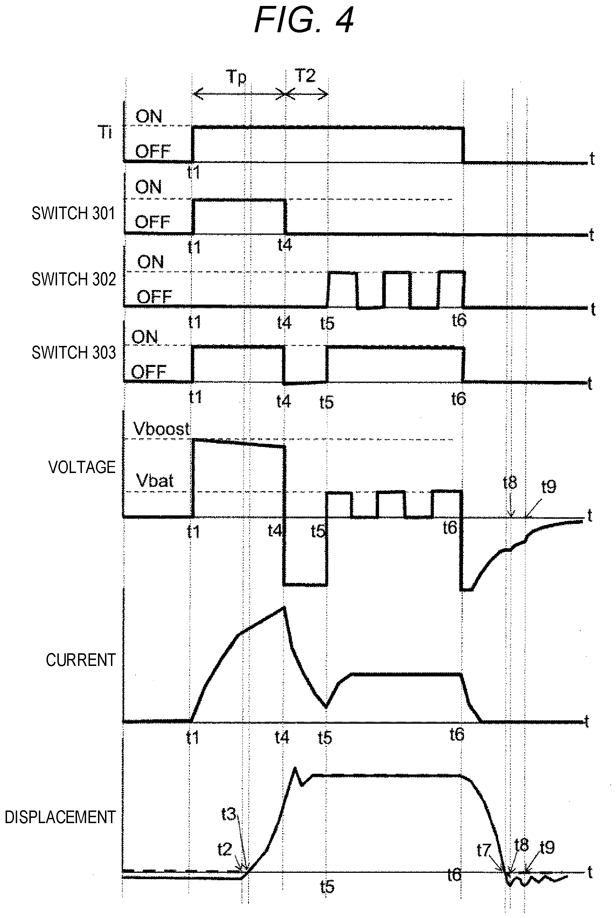

The operation of controlling the fuel injection valve with the control device is described in conjunction with FIG. 4. When a drive pulse Ti is delivered from an ECU to a control device 3, in synchronization with the rising, the switch control means 312 turns the switch 303 and the switch 301 ON (time t1) . Then, the voltage Vboost boosted by the boosting circuit 310 is applied between the terminals of the solenoid 203, and current starts flowing gradually. The current gradually increases, and the magnetic field generated by the solenoid 203 also increases accordingly. When the magnetic attractive force for attracting the anchor 205 toward the core 202 by the magnetic field becomes greater than the zero spring force, the anchor 205 starts moving in the direction of the core 202 (time t2) .

There is a gap between the initial position of the anchor 205, which is pressed against the stopper 211 by the force of the zero spring 210, and the protrusion of the valve element 204. After the anchor 205 is moved in the gap, the valve element 204 starts being lifted by the anchor 205. At this time, the fuel starts flowing through the injection hole 209 (time t3) .

When the time Tp stored in the setting value memory 321 elapses after the current starts being applied to the solenoid at the time t1, the switch 303 and the switch 301 are turned OFF (time t4). Normally, this timing is reached before the anchor 205 collides with the core 202. This is to prevent the momentum of collision between the anchor 205 and the core 202 from being greater than necessary. When the switches 303 and 301 are turned OFF, the current, which previously flows into the GND through the switch 303, passes through the diode 308 and flows into the capacitor 309, so that the voltage of the LOW-side terminal of the solenoid 203 becomes greater. Specifically, as indicated between t4 and t5 of the graph of voltage of FIG. 4, the voltage applied to the solenoid assumes a negative value.

When the time T2 stored in the setting value memory 322 elapses after the switches 301 and 303 are canceled at the time t4, the switch 302 and the switch 303 are turned ON to apply a battery voltage Vbat to the solenoid 203 (time t5). Thus, a state where the valve element 204 and the anchor 205 are in contact with the core 202 is maintained. In addition, at this time, the current flowing into the solenoid 203 is measured from the voltage generated in the shunt resistor 304, and the switch 302 is turned ON and OFF so that the current value corresponds to the value Ih stored in the setting value memory 323.

In synchronization with falling of the Ti pulse, the switches 302 and 303 are turned OFF (time t6). Then, the current is rapidly attenuated and the magnetic attractive force is attenuated. The valve element 204 and the anchor 205 are pressed by the force of the set spring 207 and start moving in the direction of the valve seat 206. In addition, at this time, during the attenuation of the current, the current flows into the capacitor 309. Therefore, a reverse voltage is applied to the solenoid 203. When the current is converged to zero, the voltage gradually approaches zero. Eventually, the valve element 204 reaches the valve seat 206, and the fuel flowing through the injection hole is stopped (time t7).

The valve element 204 and the valve seat 206 are elastic. Therefore, even after the valve element 204 reaches the valve seat 206, the valve element 204 continues moving in the direction of the valve seat 206. However, upon movement to some extent, the elastic deformation of the valve element 204 and the valve seat 206 starts returning to the original state. At this time, the anchor 205 moves away from the valve element and continues moving in the direction of the valve seat 206 by inertia (time t8). Until the time t8, the force of the set spring 207 and the force of the fuel pressure are applied to the anchor 205 via the valve element 204. However, after the time t8, such forces are not applied as the anchor 205 moves away from the valve element 204. Therefore, the acceleration of the anchor 205 is sharply reduced. When the acceleration of the anchor 205 is changed, the back electromotive force generated in the solenoid 203 is changed by the movement of the anchor 205, so that an inflexion point is generated in the voltage of the solenoid 203.

The anchor 205, even after moving from the valve element 204, continues moving in the direction of the valve seat 206 by inertia, but eventually collides with the stopper 211. This collision rapidly changes the acceleration of the anchor 205. Therefore, the back electromotive force generated in the solenoid 203 is changed, and an inflexion point is generated in the voltage of the solenoid (time t9).

Heretofore, the operation of controlling the fuel injection device with the control device has been described in conjunction with FIG. 4.

With such a mechanism, the fuel injection valve is controlled and injects the fuel in an amount corresponding to the width of the drive pulse Ti given. It is desirable that the amount of air introduced into the internal combustion engine and the amount of fuel are at a certain ratio for efficient action of an exhaust catalyst. Therefore, an amount of air Qa measured by the airflow sensor is divided by an engine rotation rate Neng to obtain an intake amount per rotation Qa/Neng, which is divided by a target air-fuel ratio λ to obtain a value Qa/Neng/λ, and a value proportional to the value Qa/Neng/λ is defined as a pulse width Ti.

However, there are variations among individual fuel injection devices. Even when the same drive pulse Ti is added, there are variations in amount of fuel injected from the fuel injection devices mounted on respective cylinders, so that some cylinders have a rich air-fuel ratio and some cylinders have a lean air-fuel ratio.

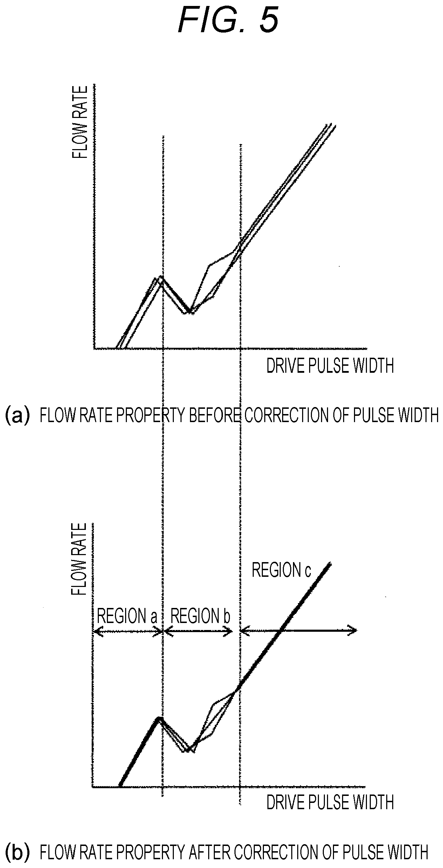

The flow rate properties of typical fuel injection valves vary in the manner illustrated in FIG. 5(a). When the timing of valve opening start Ta' and valve closing completion Tb is detected and a drive pulse Ti given to each fuel injection valve is corrected to Ti' to make Tb - Ta' consistent, the relationship between Ti and flow rate illustrated in FIG. 5(b) is obtained. By referring to the drawing, in Region a up to full lift and in Region c where the full lift is reached and the valve behavior settles down, the flow rate properties are consistent, but in Region b there are variations among the fuel injection valves. This is primarily because the valve behavior varies with the set spring force.

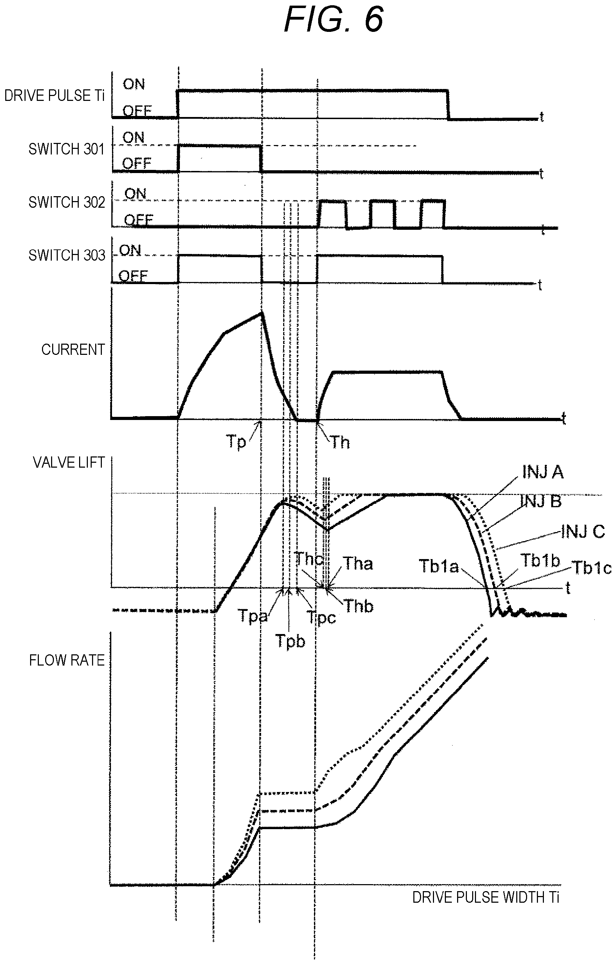

Switching patterns, current, valve behaviors and flow rate properties in the case where the same drive current is applied to three fuel injection devices INJC, INJB, INJAhaving weak, average, and strong spring forces, respectively, by means of the drive device illustrated in FIG. 3 are illustrated in FIG. 6. When the drive pulse Ti is input into the switch control means 312, until the time Tp stored in the setting value memory 321 elapses, the switch control means 312 turns the switches 301 and 303 ON and turns the switch 302 OFF to apply a boosting voltage to the solenoid 203. Then, the current of the solenoid 203 is increased, the magnetic attractive force is increased, and the valve element 204 starts rising.

Upon reaching the time Tp, the switch control means 312 turns all the switches OFF and applies a reverse voltage to the solenoid 203. Then, the current flowing into the solenoid 203 is rapidly converged to zero. The magnetic attractive force Fmag generated by the solenoid 203 is gradually reduced. When the Fmag is smaller than the sum of the force Fsp of the set spring 207 and the fuel pressure Fpf, the valve shifts from rising to falling. This timing depends on the level of Fsp + Fpf. Therefore, one having a large set spring force Fsp quickly shifts from rising to falling (Tpa), and one having a small Fsp shifts late (Tpc).

The valve shifting from rising to falling when the drive current is canceled continues falling until current is again applied at Th. When the time reaches the sum Th of the time Tp and T2 stored in the setting value memories 321 and 322, respectively, the switch 303 is turned ON and the switch 301 is turned OFF, and the switch 302 is turned ON and OFF so that the current falls within a certain range from Ih stored in the setting value memory 323. Thus, at a certain time, the magnetic attractive force again exceeds Fsp + Fpf. This time becomes later when Fsp is larger (Tha) and is earlier when it is smaller (Thc). At this timing, the valve again starts rising.

In addition, the velocity of the rising valve increases depending on the exceeding amount of the period attractive force of Ih over Fsp + Fpf. Therefore, when Ih is the same, the rising velocity is faster when the spring force is smaller, and the rising velocity is later when the spring force is larger. The valve, which has started rising, eventually reaches full lift and maintains full lift until the drive pulse is canceled.

Furthermore, when the drive pulse Ti is canceled, the valve element reaches the valve seat at time Tb1a, which is the earliest, in the INJA having the strongest spring force, and the valve element reaches the valve seat at time Tb1c, which is the latest, in the INJC having the weakest spring force. As described above, the valve behavior varies with spring force. As a result, as illustrated in the lower drawing of FIG. 6, the flow rate properties also vary. In addition, according to the combination of the INJs in this case, the level of the spring force can be understood from the time Tb1a, Tb1b, Tb1c at which the valve element reaches the valve seat.

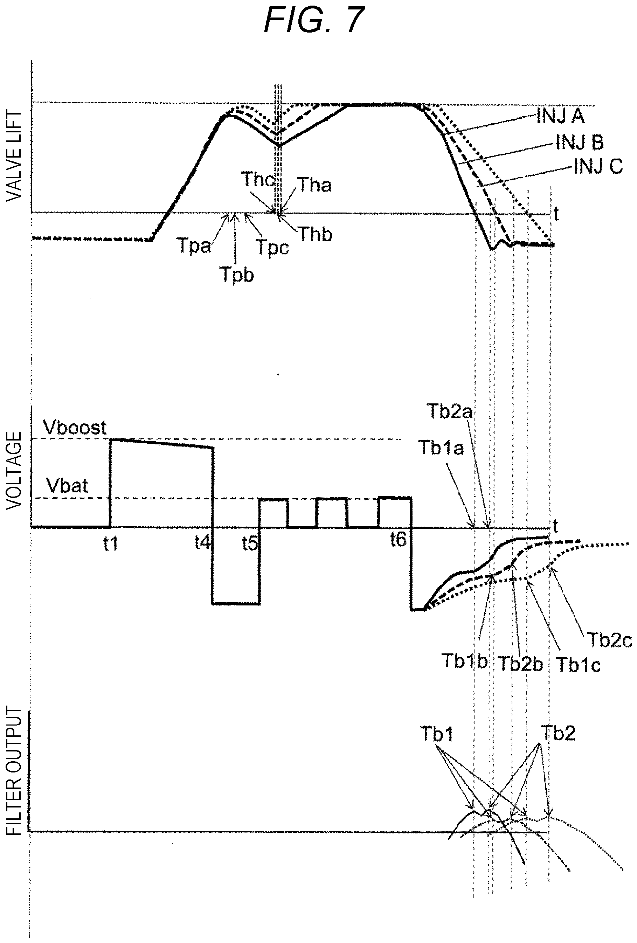

A procedure of studying the level of spring force is described in conjunction with FIG. 7. When the valve behaviors vary with spring force as illustrated in the upper drawing of FIG. 7, the corresponding voltages of the solenoids are as illustrated in the middle drawing of FIG. 7. As illustrated in the drawing, inflexion points appear in the voltage at the timing Tb1 at which the valve element reaches the valve seat in each fuel injection device and then also at the timing Tb2 at which the anchor is moved by inertia and collides with the stopper. When this voltage is input to a filter that highlights a change, e.g., by second-order differentiation, the output is as illustrated in the lower drawing of FIG. 7. Two peaks appear corresponding to Tb1 and Tb2. As illustrated in the drawing, the first peaks Tb1a, b, c of the filter output correspond to the timing of valve closure completion. The level of set spring force can be estimated from the valve closure completion timing.

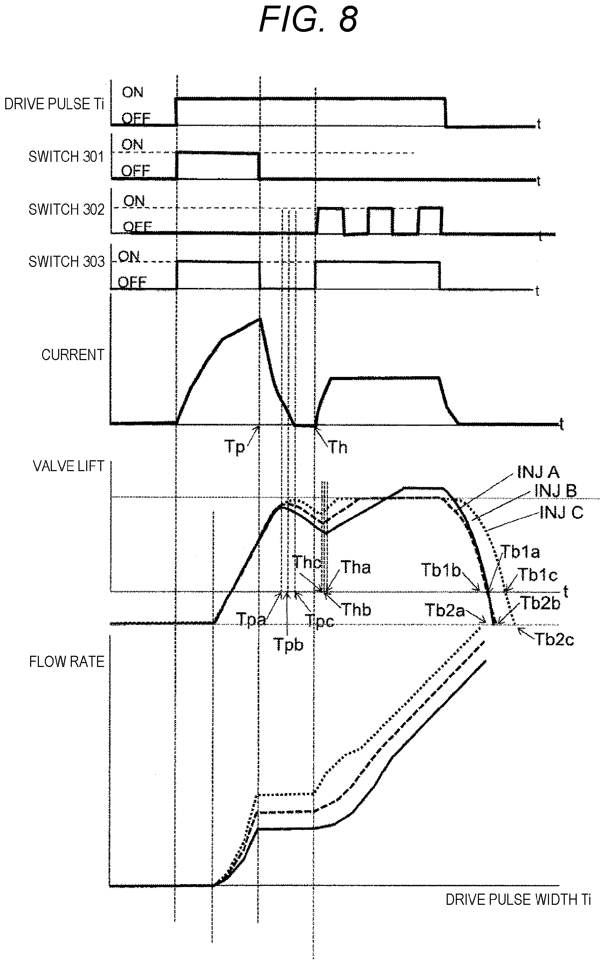

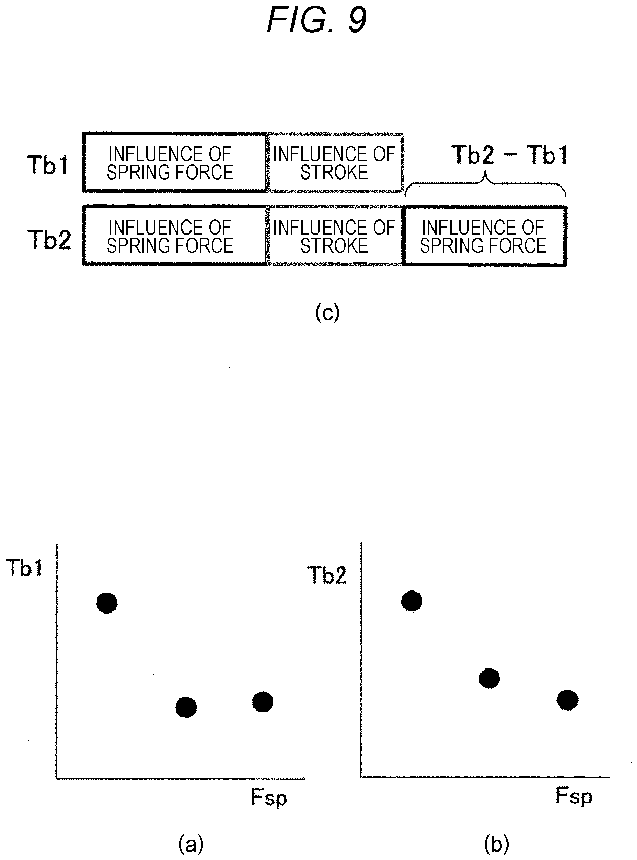

Incidentally, although FIG. 6 depicts that the lift amounts (hereinafter, the strokes) at the highest valve lift point of all the INJs are the same. However, in actual INJs, the strokes vary among INJs. Then, the time Tb1 at which the valve element reaches the valve seat when the drive pulse is canceled at the same timing is as illustrated in FIG. 8. The relationship between the spring force Fsp and Tb1 in this case is plotted in FIG. 9 (a) in which the sequence of the set spring force Fsp and Tb1 is partly changed. The relationship between the time Tb2 at which the anchor hits the stopper and the set spring force Fsp is illustrated in FIG. 9(b) in which the relationship of the level of the set spring force Fsp is consistent with the relationship of the level of Tb2.

The reason why the relationship of the sequence of the level of the set spring force Fsp, which is not maintained at Tb1, is maintained at Tb2 is described in conjunction with FIG. 9(c). Tb1 is composed of a contribution of the set spring force Fsp and a contribution of the stroke. Tb2 further includes a contribution of the set spring force Fsp in addition to the above composition. Therefore, the proportion of the contribution of the stroke in the total amount is reduced. Thus, the use of Tb2 rather than Tb1 enables the estimation of the level of the set spring force Fsp while the influence of the stroke is removed.

In addition, from a different point of view, when the stroke is large, the movement distance of the valve element to the valve seat from the valve closure start becomes longer, and Tb1 is increased. However, the distance from Tb1 to Tb2 does not affect the stroke. Furthermore, the valve element and the anchor have a fast velocity at Tb1 when the stroke is longer. Therefore, the movement time from Tb1 to Tb2 is short. As described above, when Tb2 - Tb1 is added to Tb1, the influence of the stroke is offset, enabling a reduction in influence of the stroke during estimation of Fsp.

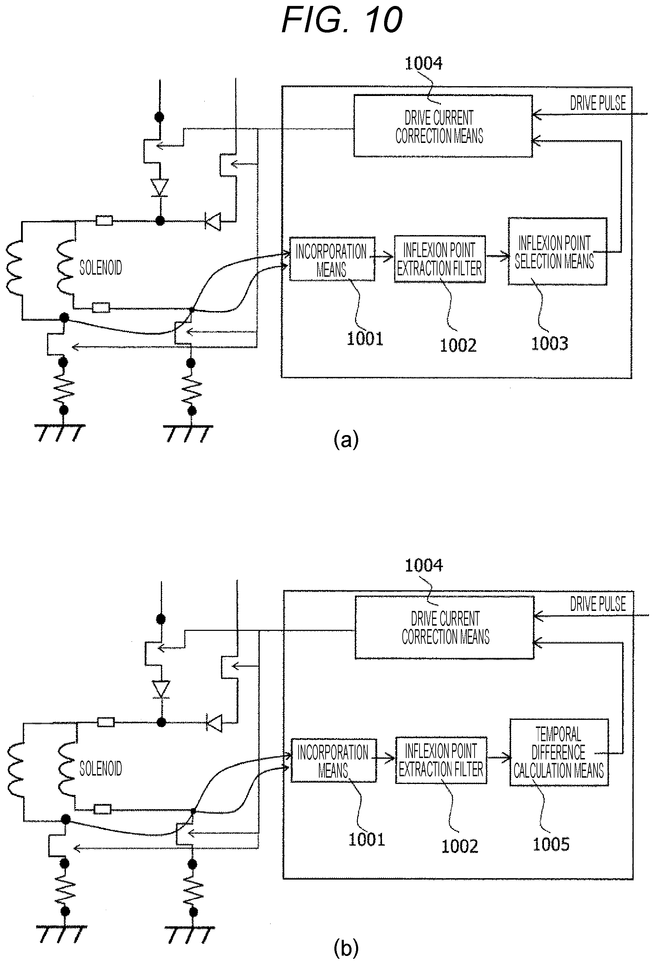

Thus, as illustrated in FIG. 10(a), a control device of a fuel injection device characterized by consisting of an incorporation means 1001 for reading a drive voltage of a solenoid, an inflexion point extraction filter 1002 for filtering the drive voltage to highlight inflexion points, a means 1003 for selecting a later inflexion point of the extracted inflexion points, and a drive current correction means 1004 for correcting the parameters Tp, T2, Ih of the setting value memories 321, 322, 323 illustrated in FIG. 3 on the basis of the timing of the selected, later inflexion point to correct the drive current of an INJ is used.

In addition, instead of choosing the timing of the later inflexion point, a control device of a fuel injection device characterized by consisting of an incorporation means 1001 for reading a drive voltage of a solenoid, an inflexion point extraction filter 1002 for filtering the drive voltage to highlight inflexion points, a means 1005 of calculating a temporal difference between a later inflexion point and an earlier inflexion point of the extracted inflexion points, and a drive current correction means 1004 for correcting the parameters Tp, T2, Ih of the setting value memories 321, 322, 323 illustrated in FIG. 3 on the basis of the temporal difference between the inflexion points to correct the drive current of an INJ may be used.

In addition, in other words, a control device of a fuel injection device for controlling current/voltage applied to a solenoid of the fuel injection device on the basis of drive current parameters to control opening and closing of the fuel injection valve so as to control fuel injection property, characterized in that the drive current parameters are corrected on the basis of a later inflexion point of the two inflexion points appeared in a drive voltage of a solenoid or a temporal difference between a later inflexion point and an earlier inflexion point may be used.

Thus, the following effect is obtained when a later inflexion point of the two inflexion points of a solenoid drive voltage or a temporal difference between a later one and an earlier one is used: The influence of variations in stroke during estimation of a set spring force can be reduced, which is used to correct the drive current parameters to synchronize the operations of the fuel injection valves and homogenize the fuel injection properties.

A specific action and effect of correcting the parameters of drive current are described in "Addition of Tp correction means", "Addition of Th correction means", and "Addition of Ih correction means" below. In addition, when the present invention is carried out, regarding the two inflexion points in a solenoid drive voltage,
(1) the time of an earlier inflexion point,
(2) the time of a later inflexion point, and
(3) a temporal difference between a later inflexion point and an earlier inflexion point,
and which of (1), (2), and (3) correlates with the drive current parameters are studied. It is sufficient when (2) or (3) applies.

The action and effect are described, for example, in the case where Tp is corrected.

### <Addition of Tp correction means>

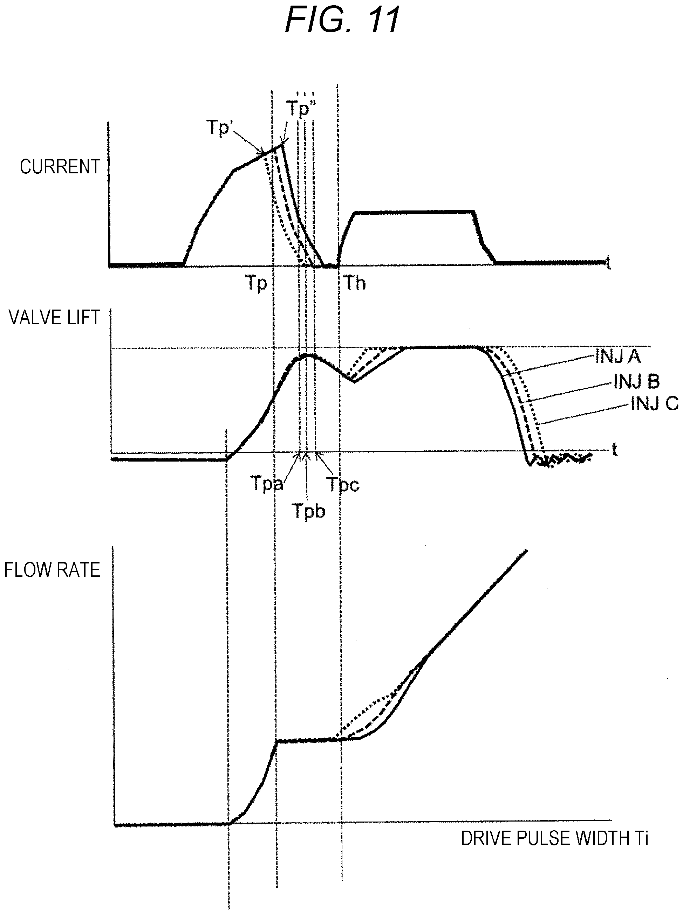

As illustrated in FIG. 7, when a solenoid drive voltage is filtered by the inflexion point extraction filter 1002, as illustrated in the lower drawing of FIG. 7, two peaks Tb1 and Tb2 appear in the filter. Therefore, the timing Tb2 of the later peak of the two peaks is detected by the inflexion point selection means 1003. When Tb2 is greater than average, as illustrated in the upper drawing of FIG. 11, the value of Tp of the setting value memory 321 is reduced to Tp', and when Tb2 is smaller than average, the value of Tp is increased to Tp". Then, the valve lifts by the peak current are homogenized as illustrated in the middle drawing of FIG. 11. Thus, the flow rate properties are as illustrated in the lower drawing of FIG. 11. As the planar portions of the flow rate properties are homogenized, the flow rate properties are homogenized as compared with those of FIG. 6. Furthermore, when Th is corrected with respect to each fuel injection device, the flow rate properties are further homogenized. A description is given below.

### <Addition of Th correction means>

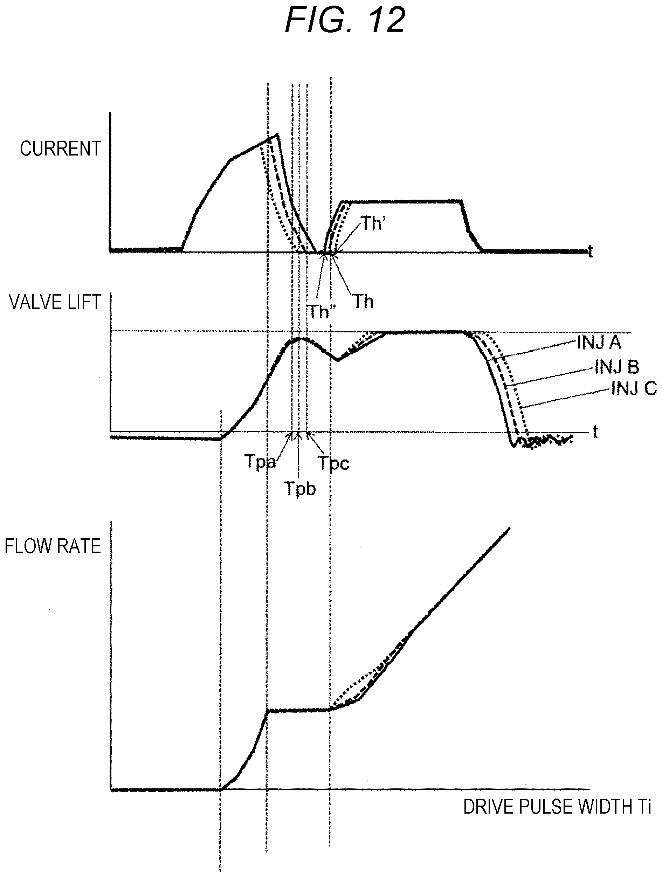

As illustrated in the upper drawing of FIG. 12, in the case of a fuel injection device in which Tb2 output by the inflexion point selection means 1003 is late, i.e., in the case of a fuel injection device having a weak spring force, when Th = Tp + T2 is changed to Th', which is late, the rising of the magnetic attractive force becomes late and the timing at which the valve lift again shifts to rising becomes late. In addition, in the case of a fuel injection device in which Tb2 is early, i.e., in the case of a fuel injection device having a strong spring force, when Th is changed to Th", which is early, the rising of the period attractive force becomes early and the timing at which the valve lift again shifts to rising becomes early. As described above, when T2 stored in the setting memory 322 is corrected according to Tb2 detected, the timing at which all the fuel injection devices shift to rising is synchronized as illustrated in the middle drawing of FIG. 12.

In this way, the flow rate properties are as illustrated in the lower drawing of FIG. 12. The heights of the planar portions of the flow rate properties and the drive pulse widths after the planar portions at which the flow rate again starts increasing are homogenized. However, the gradients to the full lift are still different.

### <Addition of Ih correction means>

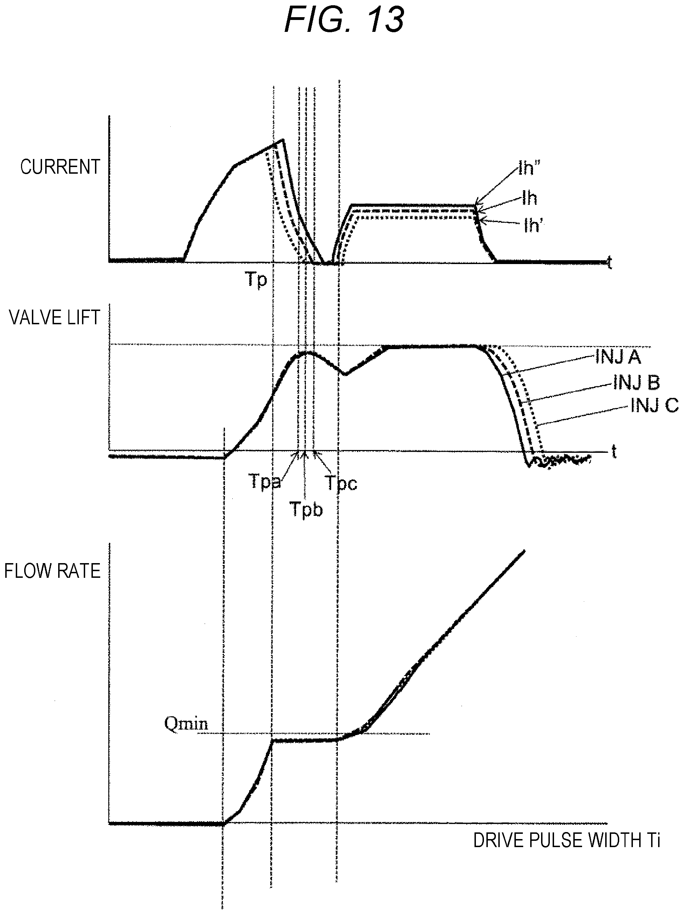

Therefore, as illustrated in the upper drawing of FIG. 13, Ih of the fuel injection device in which Tb2 output by the inflexion point selection means 1003 is early, i.e., a fuel injection device a having a large spring force is corrected to Ih", which is a larger value, and Ih of the fuel injection device in which Tb2 is late, i.e., a fuel injection device c having a small spring force, is corrected to Ih', which is a smaller value, and they are written into the setting value memory 323. Then, the rising velocities of the valve lift from the ends of the flat portions to the full lift are homogenized as illustrated in the middle drawing of FIG. 13. In addition, the flow rate properties in this case have a homogeneous gradient as illustrated in the lower drawing of FIG. 13.

As described above, when the three parameters Tp, T2, Ih are corrected on the basis of the detected Tb2 according to the set spring force, the valve behaviors are synchronized, so that the flow rate properties are also homogenized. In this way, the fuel injection devices can be used in a range up to line Qmin of the flow rate property illustrated in the lower drawing of FIG. 13. The aforementioned action is expected to provide the effect of correcting variations in set spring force of fuel injection devices to homogenize the fuel injection amounts.

### <Method of extracting a later peak from filter output>

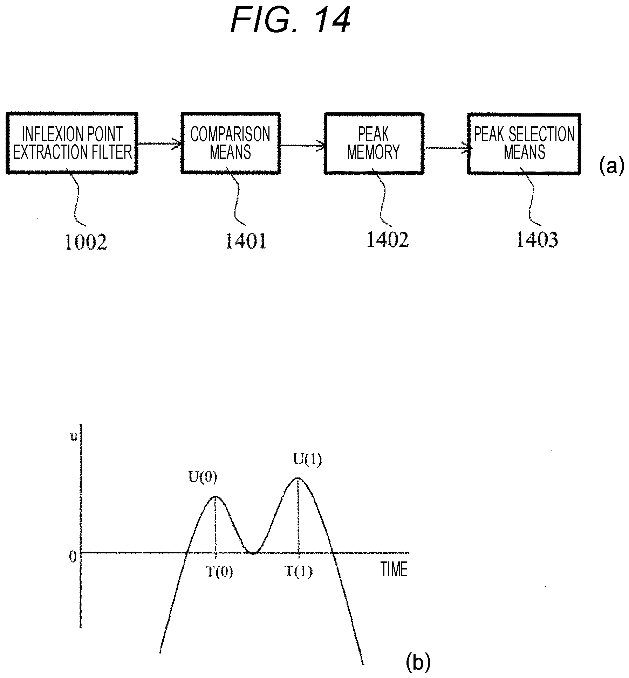

In the present example, the time of a later peak is specified from a filter output. Here, a means of specializing the time of a later inflexion point from a filter output is described. As illustrated in FIG. 14(a), the means of specializing a later time includes a comparison means 1401 for comparing a current value and a previous value of the inflexion point extraction filter 1002 to detect a peak, a peak memory 1402 for storing all detected peaks, and a peak selection means 1403 for recognizing the latest time of the stored peaks as a later inflexion point.

Regarding a signal illustrated in FIG. 14(b), which is output from the inflexion point extraction filter 1002 of FIG. 10, a comparison is made by the comparison means 1401 between a current value u(t), a value u(t - 1) of the first last sample, and a value u (t - 2) of the second last sample.
In this case, when
U(t - 2) < u(t - 1) and u(t - 1) > u(t)
is established, u(t - 1) is determined to be a peak. When it is determined to be a peak, the time t-1 at which the peak is made and the peak value u (t - 1) are written into the peak memory as T(0) and U(0), respectively.
Next, when
U(t - 2) < u(t - 1) and u(t - 1) > u(t)
is again established, this is also determined to be a peak. The time t - 1 at which the peak is made and the peak value u(t - 1) are written into the peak memory as T(1) and U(1), respectively. This is repeated to the end of the detection section. Upon reaching the end of the detection section, the peak selection means outputs T(1) as a later peak time.

In addition, a peak time difference T(1) - T(0) may be chosen. A later peak time or a difference in peak time is used so that the drive current correction means 1004 of FIG. 10 corrects the drive current as described in "Addition of Tp correction means", "Addition of Th correction means", and "Addition of Ih correction means" above. Then, the drive current is controlled to correct differences in set spring force among individual injectors. As a result, the flow rate properties are homogenized, and a minimum injection amount is reduced.

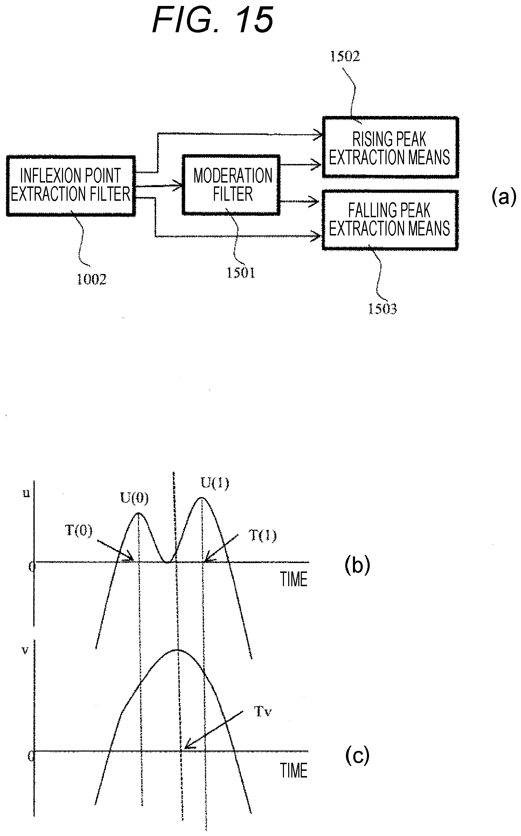

Another conceivable configuration is described below. As illustrated in FIG. 15 (a), it is formed of a filter 1501 for moderating two inflexion points, a rising peak extraction means 1502 for extracting a peak of an inflexion point extraction filter when the output of the filter is increased, and a falling peak extraction means 1503 for extracting a peak of an inflexion point extraction filter when the output of the moderation filter is not increased.

A signal illustrated in FIG. 15(b), which is output from the inflexion point extraction filter 1002 of FIG. 10, is moderated by the moderation filter 1501 into a single ridge as illustrated in FIG. 15 (b). At this time, as illustrated in FIG. 15(b), it can be seen that the first peak in the output of the inflexion point extraction filter 1002 appears during rising of the output of the moderation filter 1501 and the later peak appears during falling in the output of the moderation filter 1501.

Thus, the rising peak extraction means 1502 searches a maximum value only when the output of the moderation filter 1501 rises, and the falling peak filter 1503 searches a maximum value only when the output of the moderation filter 1501 falls. In this way, the two peak extraction means are provided, enabling separate identification of the first peak and the second peak.

The time of the later peak and a difference in peak time, which are searched by the two extraction means, correlates with the set spring force. The drive current correction means 1004 of FIG. 10 uses these values to correct the drive value as indicated in "Addition of Tp correction means", "Addition of Th correction means", and "Addition of Ih correction means" above. Thus, the drive current is controlled to correct a difference in set spring force among individual injectors. As a result, the flow rate properties are homogenized, and a minimum injection amount is reduced.

### Reference Signs List

- 101: air cleaner
- 102: airflow sensor
- 103: throttle
- 104: collector
- 105: intake port
- 106: cylinder
- 111: fuel tank
- 112: low-pressure pump
- 113: low-pressure pipe
- 114: high-pressure pump
- 115: high-pressure pipe
- 116: fuel injection device
- 121: spark plug
- 122: piston
- 123: connecting rod
- 201: housing
- 202: core
- 203: solenoid
- 204: valve element
- 205: anchor
- 206: valve seat
- 207: set spring
- 208: spring adjuster
- 209: injection hole
- 301: switch
- 302: switch
- 303: switch
- 304: shunt resistor
- 305: diode
- 306: diode
- 307: diode
- 308: diode
- 309: capacitor
- 310: boosting circuit
- 311: battery
- 312: switch control means
- 321: setting value memory
- 322: setting value memory
- 323: setting value memory
- 341: correction means
- 342: correction means
- 343: correction means
- 331: differentiation means
- 332: differentiation means
- 333: peak search means
- 334: peak search means

## Claims

1. A control device (3) of a fuel injection device (116), the control device (3) controlling current/voltage applied to a solenoid (203) of a fuel injection device (116) on the basis of a drive current parameter to control fuel injection property, wherein
the drive current parameter is corrected on the basis of a later inflexion point of two inflexion points appeared in a drive voltage of the solenoid (203) or a temporal difference between a later inflexion point and an earlier inflexion point, when a fuel injection valve is closed, wherein the control device (3) is **characterized in that**
- a comparison means is configured to compare a current value and a previous value of an inflexion point extraction filter (1002) to detect a peak;
- a peak memory (1402) is configured to store all detected peaks; and
- a peak selection means (1403) is configured to recognize the latest time of stored peaks as a later inflexion point.

2. The control device (3) of a fuel injection device according to claim 1, the control device (3) consisting of:
- an inflexion point extraction filter (1002) configured to filter a drive voltage of the solenoid (203) to extract inflexion points; and
- a drive current correction means configured to correct the drive current parameter on the basis of timing of a later inflexion point of inflexion points extracted by the inflexion point extraction filter (1002) or a temporal difference between inflexion points.

3. The control device (3) of a fuel injection valve according to claim 1, wherein
the control device (3) is configured to apply a boosting voltage to a fuel injection valve, canceling the boosting voltage, and then applying holding current, the control device (3) further comprising:
- a means configured to select a later inflexion point of inflexion points extracted by the inflexion point extraction filter (1002) or a means configured to calculate a temporal difference between a later inflexion point and an earlier inflexion point; and
- a means configured to correct a combination including at least one of boosting voltage application time, time from cancelation of a boosting voltage to application of holding current, and a holding current value on the basis of timing of a later inflexion point or a temporal difference between inflexion points for each cylinder.

4. The fuel injection valve control device (3) according to claim 1 or 2, comprising:
- a filter (1501) configured to moderate two inflexion points into a single wave ridge;
- a rising peak extraction means (1502) configured to extract a peak of an inflexion point extraction filter (1002) when an output of the filter increases; and
a falling peak extraction means (1503) configured to extract a peak of an inflexion point extraction filter (1002) when an output of a moderation filter (1501) is not increased.

5. The fuel injection valve control device (3) according to claim 1 or 2, wherein
the drive current parameter is corrected on the basis of a later inflexion point of two inflexion points appeared in a drive voltage of the solenoid (203) or a temporal difference between a later inflexion point and an earlier inflexion point.

6. The fuel injection valve control device (3) according to claim 3, wherein
on the basis of timing of a later inflexion point of two inflexion points appeared in a drive voltage of the solenoid (203) or a temporal difference between a later inflexion point and an earlier inflexion point, boosting voltage application time is shortened when timing is late or a temporal difference is long.

7. The fuel injection valve control device (3) according to claim 3, wherein
on the basis of timing of a later inflexion point of two inflexion points appeared in a drive voltage of the solenoid (203) or a temporal difference between a later inflexion point and an earlier inflexion point, time from cancelation of a boosting voltage to application of holding current is increased when timing is late or a temporal difference is long.

8. The fuel injection valve control device (3) according to claim 3, wherein
on the basis of timing of a later inflexion point of two inflexion points appeared in a drive voltage of the solenoid (203) or a temporal difference between a later inflexion point and an earlier inflexion point, a holding current value is reduced when timing is late or a temporal difference is long.

## Patentansprüche

1. Steuervorrichtung (3) für eine Kraftstoffeinspritzvorrichtung (116), wobei die Steuervorrichtung (3) Strom/Spannung, die an ein Solenoid (203) einer Kraftstoffeinspritzvorrichtung (116) angelegt werden, auf der Grundlage eines Ansteuerstromparameters steuert, um eine Kraftstoffeinspritzeigenschaft zu steuern, wobei
der Ansteuerstromparameter auf der Grundlage eines späteren Wendepunkts von zwei Wendepunkten, die in einer Ansteuerspannung des Solenoids (203) erschienen, oder einer zeitlichen Differenz zwischen einem späteren Wendepunkt und einem früheren Wendepunkt korrigiert wird, wenn ein Kraftstoffeinspritzventil geschlossen wird, wobei die Steuervorrichtung (3) **dadurch gekennzeichnet ist, dass**
- ein Vergleichsmittel konfiguriert ist, einen aktuellen Wert und einen vorhergehenden Wert eines Wendepunktextraktionsfilters (1002) zu vergleichen, um einen Spitzenwert zu detektieren;
- ein Spitzenwertspeicher (1402) konfiguriert ist, alle detektierten Spitzenwerte zu speichern; und
- ein Spitzenwertauswahlmittel (1403) konfiguriert ist, die letzte Zeit gespeicherter Spitzenwerte als einen späteren Wendepunkt zu erkennen.

2. Steuervorrichtung (3) für ein Kraftstoffeinspritzvorrichtung nach Anspruch 1, wobei die Steuervorrichtung (3) aus Folgendem besteht:
- einem Wendepunktextraktionsfilter (1002), das konfiguriert ist, eine Ansteuerspannung des Solenoids (203) zu filtern, um Wendepunkte zu extrahieren; und
- einem Ansteuerstromkorrekturmittel, das konfiguriert ist, den Ansteuerstromparameter auf der Grundlage des Zeitpunkts eines späteren Wendepunkts von Wendepunkten, die durch das Wendepunktextraktionsfilter (1002) extrahiert wurden, oder einer zeitlichen Differenz zwischen Wendepunkten zu korrigieren.

3. Steuervorrichtung (3) für ein Kraftstoffeinspritzventil nach Anspruch 1, wobei
die Steuervorrichtung (3) konfiguriert ist, eine Verstärkungsspannung an ein Kraftstoffeinspritzventil anzulegen, die Verstärkungsspannung aufzuheben und dann den Haltestrom einzuleiten, wobei die Steuervorrichtung (3) ferner Folgendes umfasst:
- ein Mittel, das konfiguriert ist, einen späteren Wendepunkt von Wendepunkten, die durch das Wendepunktextraktionsfilter (1002) extrahiert wurden, zu wählen, oder ein Mittel, das konfiguriert ist, eine zeitliche Differenz zwischen einem späteren Wendepunkt und einem früheren Wendepunkt zu berechnen; und
- ein Mittel, das konfiguriert ist, eine Kombination zu korrigieren, die eine Verstärkungsspannungsanlegezeit und/oder eine Zeit vom Aufheben einer Verstärkungsspannung zum Anlegen eines Haltestroms und/oder einen Haltestromwert auf der Grundlage eines Zeitpunkts eines späteren Wendepunkts oder einer zeitlichen Differenz zwischen Wendepunkten für jeden Zylinder enthält.

4. Kraftstoffeinspritzventilsteuervorrichtung (3) nach Anspruch 1 oder 2, die Folgendes umfasst:
- ein Filter (1501), das konfiguriert ist, zwei Wendepunkte in einen einzelnen Wellenberg abzuschwächen;
- ein Extraktionsmittel (1502) für ansteigende Spitzenwerte, das konfiguriert ist, einen Spitzenwert eines Wendepunktextraktionsfilters (1002) zu extrahieren, wenn sich eine Ausgabe des Filters erhöht; und
ein Extraktionsmittel (1503) für abfallende Spitzenwerte, das konfiguriert ist, einen Spitzenwert eines Wendepunktextraktionsfilters (1002) zu extrahieren, wenn eine Ausgabe eines Dämpfungsfilters (1501) nicht erhöht ist.

5. Kraftstoffeinspritzventilsteuervorrichtung (3) nach Anspruch 1 oder 2, wobei
der Ansteuerstromparameter auf der Grundlage eines späteren Wendepunkts von zwei Wendepunkten, die in einer Ansteuerspannung des Solenoids (203) erschienen, oder einer zeitlichen Differenz zwischen einem späteren Wendepunkt und einem früheren Wendepunkt korrigiert wird.

6. Kraftstoffeinspritzventilsteuervorrichtung (3) nach Anspruch 3, wobei
die Verstärkungsspannungsanlegezeit auf der Grundlage des Zeitpunkts eines späteren Wendepunkts von zwei Wendepunkten, die in einer Ansteuerspannung des Solenoids (203) erschienen, oder einer zeitlichen Differenz zwischen einem späteren Wendepunkt und einem früheren Wendepunkt verkürzt wird, wenn der Zeitpunkt spät ist oder eine zeitliche Differenz groß ist.

7. Kraftstoffeinspritzventilsteuervorrichtung (3) nach Anspruch 3, wobei
die Zeit vom Aufheben einer Verstärkungsspannung zum Anlegen eines Haltestroms auf der Grundlage des Zeitpunkts eines späteren Wendepunkts von zwei Wendepunkten, die in einer Ansteuerspannung des Solenoids (203) erschienen, oder einer zeitlichen Differenz zwischen einem späteren Wendepunkt und einem früheren Wendepunkt erhöht wird, wenn der Zeitpunkt spät ist oder eine zeitliche Differenz groß ist.

8. Kraftstoffeinspritzventilsteuervorrichtung (3) nach Anspruch 3, wobei
ein Haltestromwert auf der Grundlage des Zeitpunkts eines späteren Wendepunkts von zwei Wendepunkten, die in einer Ansteuerspannung des Solenoids (203) erschienen, oder einer zeitlichen Differenz zwischen einem späteren Wendepunkt und einem früheren Wendepunkt verringert wird, wenn der Zeitpunkt spät ist oder eine zeitliche Differenz groß ist.

## Revendications

1. Dispositif de commande (3) d'un dispositif d'injection de carburant (116), le dispositif de commande (3) commandant un(e) courant/tension appliqué(e) à un solénoïde (203) d'un dispositif d'injection de carburant (116) sur la base d'un paramètre de courant pilote pour commander une propriété d'injection de carburant, dans lequel
le paramètre de courant pilote est corrigé sur la base d'un point d'inflexion postérieur de deux points d'inflexion apparus dans une tension pilote du solénoïde (203) ou sur la base d'une différence temporelle entre un point d'inflexion postérieur et un point d'inflexion antérieur quand une valve d'injection de carburant est fermée, dans lequel le dispositif de commande (3) est **caractérisé en ce que**
- un moyen de comparaison est configuré pour comparer une valeur actuelle et une valeur précédente d'un filtre d'extraction de points d'inflexion (1002) pour détecter un pic ;
- une mémoire de pics (1402) est configurée pour stocker tous les pics détectés ; et
- un moyen de sélection de pic (1403) est configuré pour reconnaître le temps le plus postérieur de pics stockés à titre de point d'inflexion postérieur.

2. Dispositif de commande (3) d'un dispositif d'injection de carburant selon la revendication 1, le dispositif de commande (3) consistant en :
- un filtre d'extractions de point d'inflexion (1002) configuré pour filtrer une tension pilote du solénoïde (203) pour extraire des points d'inflexion ; et
- un moyen de correction de courant pilote configuré pour corriger le paramètre de courant pilote sur la base d'une temporisation d'un point d'inflexion postérieur parmi des points d'inflexion extraits par le filtre d'extraction de points d'inflexion (1002) ou sur la base d'une différence temporelle entre des points d'inflexion.

3. Dispositif de commande (3) d'une valve d'injection de carburant selon la revendication 1, dans lequel
le dispositif de commande (3) est configuré pour appliquer une tension d'amplification à une valve d'injection de carburant, annulant la tension d'amplification, et puis pour appliquer un courant de maintien, le dispositif de commande (3) comprenant en outre :
- un moyen configuré pour sélectionner un point d'inflexion postérieur parmi des points d'inflexion extraits par le filtre d'extraction de points d'inflexion (1002) ou un moyen configuré pour calculer une différence temporelle entre un point d'inflexion postérieur et un point d'inflexion antérieur ; et
- un moyen configuré pour corriger une combinaison incluant au moins un élément parmi un temps d'application de tension d'amplification, un temps depuis l'annulation d'une tension d'amplification jusqu'à l'application d'un courant de maintien, et une valeur de courant de maintien sur la base d'une temporisation d'un point d'inflexion postérieur d'une différence temporelle entre des points d'inflexion pour chaque cylindre.

4. Dispositif de commande de valve d'injection de carburant (3) selon la revendication 1 ou 2, comprenant :
- un filtre (1501) configuré pour modérer deux points d'inflexion en une seule crête d'onde ;
- un moyen d'extraction de pics croissants (1502) configuré pour extraire un pic d'un filtre d'extraction de points d'inflexion (1002) quand une sortie du filtre augmente ; et
- un moyen d'extraction de pics décroissants (1503) configuré pour extraire un pic d'un filtre d'extraction de points d'inflexion (1002) quand une sortie d'un filtre de modération (1501) n'est pas augmentée.

5. Dispositif de commande de valve d'injection de carburant (3) selon la revendication 1 ou 2, dans lequel
le paramètre de courant pilote est corrigé sur la base d'un point d'inflexion postérieur parmi deux points d'inflexion apparus dans une tension pilote du solénoïde (203) ou sur la base d'une différence temporelle entre un point d'inflexion postérieur et un point d'inflexion antérieur.

6. Dispositif de commande de valve d'injection de carburant (3) selon la revendication 3, dans lequel
sur la base d'une temporisation d'un point d'inflexion postérieur parmi deux points d'inflexion apparus dans une tension pilote de solénoïde (203) ou sur la base d'une différence temporelle entre un point d'inflexion postérieur et un point d'inflexion antérieur, un temps d'application de tension d'amplification est raccourci quand une temporisation est tardive ou qu'une différence temporelle est longue.

7. Dispositif de commande de valve d'injection de carburant (3) selon la revendication 3, dans lequel
sur la base d'une temporisation d'un point d'inflexion postérieur parmi deux points d'inflexion apparus dans une tension pilote de solénoïde (203) ou sur la base d'une différence temporelle entre un. point d'inflexion postérieur et un point d'inflexion antérieur, un temps depuis une annulation d'une tension d'amplification jusqu'à une application d'un courant de maintien est augmenté quand une temporisation est tardive ou qu'une différence temporelle est longue.

8. Dispositif de commande de valve d'injection de carburant (3) selon la revendication 3, dans lequel
sur la base d'une temporisation d'un point d'inflexion postérieur parmi deux points d'inflexion apparus dans une tension pilote de solénoïde (203) ou sur la base d'une différence temporelle entre un point d'inflexion postérieur et un point d'inflexion antérieur, une valeur de courant de maintien est réduite quand une temporisation est tardive ou qu'une différence temporelle est longue.
